# FASCICULE DE BREVET EUROPEEN

(11) **EP 3 594 503 B1**
(45) Date de publication et mention de la délivrance du brevet: **30.06.2021**
(21) Numéro de dépôt: 19183977.8
(22) Date de dépôt: 02.07.2019
(51) Int. Cl.: F04D 19/02, F02C 7/36, F04D 29/54

(54) **TURBOMACHINE**
TURBOTRIEBWERK
TURBINE ENGINE

(30) Priorité: 09.07.2018 BE 201805481
(43) Date de publication de la demande: 15.01.2020
(73) Titulaire: Safran Aero Boosters SA, 4041 Herstal (BE)
(72) Inventeur: PRINCIVALLE, Rémy, 4684 Haccourt (BE)
(74) Mandataire: Lecomte & Partners

(56) Documents cités:
- EP-A1- 1 308 601
- EP-A1- 2 921 716
- US-A- 5 911 679
- US-A1- 2008 098 715

## Description

### Domaine technique

L'invention concerne une turbomachine, notamment un turboréacteur d'aéronef et en particulier la structure de son compresseur basse-pression.

### Technique antérieure

Le document US 2010/0124487 A1 décrit une turbomachine axiale avec des aubes statoriques à orientation variable (VSV pour « variable stator vane » en anglais). Dans ce document, plusieurs aubes sont fixées à une même plate-forme d'actionnement afin de simplifier le système d'actionnement des aubes à orientation variable.

Le document US 2008/098715 A1 décrit une autre turbomachine comprenant un compresseur avec deux veines en col de cygne.

Le document US 5,911,679 A1 décrit un compresseur de turbomachine qui comprend - mis à part la toute dernière rangée d'aubes - uniquement des aubes à orientation variable.

Ces technologies ne sont pas adaptées pour des compresseurs de turbomachine à haute vitesse. En effet, la vitesse de rotation des rotors de compresseur de turbomachine impacte le rendement de la turbomachine. En minimisant le poids et le nombre d'étages du compresseur, il devient possible et souhaitable de faire tourner le compresseur à de plus hautes vitesses. Un des facteurs limitant la vitesse de rotation est la charge sur les aubes, et en particulier la charge appliquée sur les aubes du redresseur le plus aval du compresseur, c'est-à-dire celles s'étendant sur la plus courte section de la veine et où la pression est la plus forte.

### Résumé de l'invention

### Problème technique

L'invention a pour objectif de résoudre au moins un des problèmes posés par l'art antérieur. Plus précisément, l'invention a pour objectif de proposer un compresseur basse-pression pour turbomachine qui soit compact et léger et qui limite les efforts sur les aubes aval. L'invention a également pour objectif de proposer une solution simple, résistante, économique, fiable, et à haut rendement.

### Solution technique

L'invention a pour objet une turbomachine, notamment un turboréacteur d'aéronef, comprenant premier carter définissant une première veine en col de cygne, un second carter définissant une seconde veine en col de cygne, et un compresseur basse-pression positionné directement entre la première et la seconde veine en col de cygne, le compresseur comprenant : un rotor muni d'au plus quatre rangées annulaires d'aubes rotoriques ; un redresseur muni d'au plus six, et préférentiellement au plus quatre, rangées annulaires d'aubes statoriques ; remarquable en ce qu'il peut être défini un plan géométrique en amont duquel les rangées d'aubes rotoriques et statoriques du compresseur sont entrelacées, et en aval duquel au moins deux rangées d'aubes sont prévues, les aubes du compresseur en aval du plan géométrique étant uniquement statoriques, à orientation fixe, et fixées à une virole interne commune.

Ainsi, un plan perpendiculaire à l'axe de rotation de la turbomachine et positionné entre deux rangées d'aubes permet de délimiter le compresseur en deux sections, une section amont dans laquelle les rangées d'aubes rotoriques et statoriques alternent et une section aval dans laquelle seules des aubes statoriques sont agencées.

Par abus de langage, il est fait mention d'un plan géométrique. En effet, selon certains modes de réalisation, lorsque la veine est très inclinée par rapport à l'axe, il est possible que les aubes de deux rangées adjacentes se chevauchent très légèrement axialement. Ainsi, le plan géométrique délimitant le compresseur en deux sections peut en fait prendre la forme d'une surface conique inter-aubes en amont de laquelle des aubes rotoriques et statoriques sont alternées, et en aval de laquelle seules des aubes statoriques sont présentes.

L'exclusion des aubes rotoriques en amont du plan dont il s'agit ici porte uniquement sur le compresseur, les aubes d'un éventuel second compresseur en aval (haute-pression) ou les aubes de turbines n'étant pas concernées. Selon des modes avantageux de l'invention, la turbomachine peut comprendre une ou plusieurs des caractéristiques suivantes, prises isolément ou selon toutes les combinaisons techniques possibles :
- les au moins deux rangées d'aubes statoriques en aval du plan géométrique sont configurées pour redresser progressivement le flux de gaz de sorte à ce qu'il ne soit sensiblement axial qu'après avoir traversé lesdites au moins deux rangées d'aubes statoriques ;
- le compresseur comprend exactement deux rangées d'aubes rotoriques ;
- le compresseur comprend exactement trois rangées d'aubes rotoriques ;
- le compresseur comprend exactement quatre rangées d'aubes statoriques, dont au moins deux en aval du plan géométrique ;
- le compresseur comprend exactement cinq rangées d'aubes statoriques, dont au moins deux en aval du plan géométrique ;
- la première rangée d'aubes à l'amont du compresseur est une rangée d'aubes statoriques, préférentiellement à orientation variable ;
- à l'exception de la rangée d'aubes statoriques la plus amont, les aubes statoriques sont à orientation fixe ;
- les aubes statoriques des au moins deux rangées sont positionnées en quinconce sur ladite virole ;
- les aubes ont une longueur axiale et les au moins deux rangées positionnées en quinconce se chevauchent axialement deux à deux, d'au moins 10% de la longueur axiale des aubes d'une des rangées, préférentiellement d'au moins 20% ou 30% ;
- les au moins deux rangées d'aubes participent chacune partiellement au redressement du flux. Le flux en amont des au moins deux rangées et en aval des au moins deux rangées change de direction. Ce changement est pour partie dû au changement de direction infligé par chaque rangée d'aubes respectivement. Par exemple la première des au moins deux rangées redresse de au moins 40% le flux (= 40% de sa déviation totale subie entre l'amont et l'aval de ces au moins deux rangées d'aubes) et les secondes aubes ou optionnellement troisièmes aubes complémentent le redressement (c'est-à-dire au plus 60%) ;
- la longueur axiale des aubes en aval du plan géométrique est croissante d'amont en aval ;
- le compresseur est configuré pour permettre une vitesse périphérique des aubes rotoriques supérieure à 300 m/s, préférentiellement supérieure à 340 m/s ;
- la turbomachine comprend une soufflante reliée au rotor par l'intermédiaire d'un réducteur ;
- les carters comprennent des bras de supports radiaux, le flux d'air entrant dans la turbomachine rencontrant, dans cet ordre, la soufflante, les bras radiaux du premier carter, le compresseur, puis les bras radiaux du second carter ;
- le premier carter est précédé d'une rangée unique d'aubes statoriques ;
- la turbomachine comprend un bec de séparation entre un flux primaire et un flux secondaire, ladite rangée unique d'aubes statoriques étant au voisinage dudit bec ;
- la turbomachine comprend un compresseur haute-pression et en ce que le second carter relie le compresseur basse-pression au compresseur haute-pression ;

L'invention peut également porter sur un procédé de compression d'un flux d'air au moyen d'un compresseur tel que défini ci-dessus, le procédé comprenant l'entraînement des aubes rotoriques à une vitesse périphérique supérieure à 340 m/s.

Selon d'autres aspects de l'invention :
- le réducteur comporte un porte-satellite solidaire du stator de la turbomachine.
- le réducteur comprend un rapport de réduction compris entre 1,50 et 2,50.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné. Toutefois, l'invention est définie exclusivement par les revendications suivantes.

### Avantages apportés

Le compresseur basse-pression selon l'invention ne comporte que 2 ou 3 étages d'aubes. Le fait de prévoir au moins deux rangées d'aubes statoriques permet de partager les efforts de redressement du flux sur ces aubes statoriques et donc d'augmenter la vitesse de rotation du rotor. Tout ceci combiné permet un haut rendement sans compromission de l'encombrement du compresseur, de son poids ou du nombre de pièces mises en jeu.

Le faible rapport de la vitesse axiale du flux sur la vitesse de rotation du rotor impose de très fortes déviations sur les stators pour le redressement. La double rangée d'aubes statoriques permet de retrouver des conditions de charge et déviation sur ces aubes qui sont similaires à un compresseur à plus petite vitesse et plus grand nombre de rangées d'aubes.

### Brève description des dessins

La figure 1 représente une turbomachine axiale selon l'invention ;
La figure 2 représente une vue radiale des aubes aval selon un premier mode de réalisation ;
La figure 3 représente une vue radiale des aubes aval selon un second mode de réalisation.

### Description des modes de réalisation

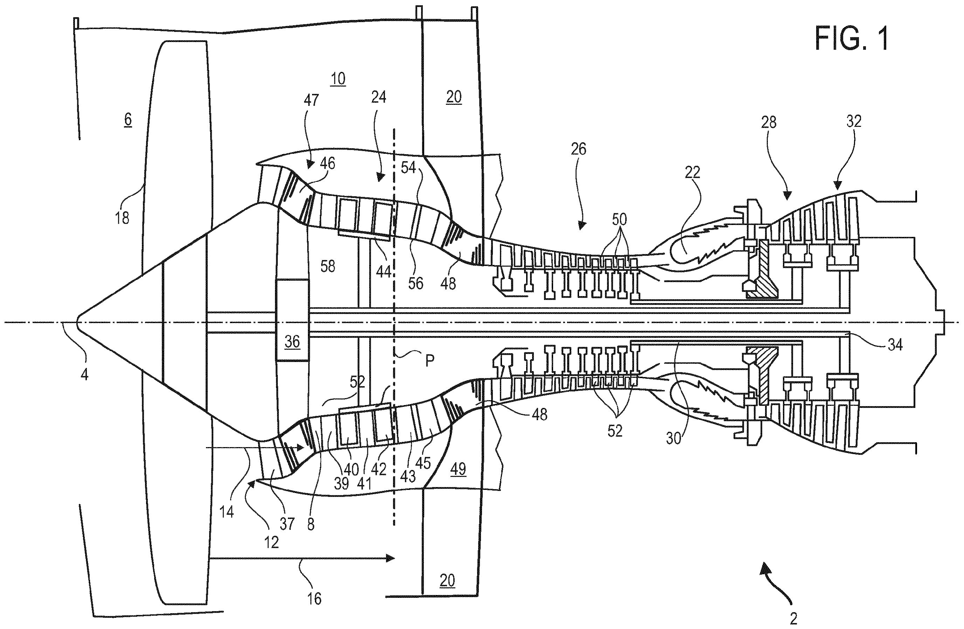

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation La figure 1 représente de manière simplifiée une turbomachine axiale. Il s'agit dans ce cas précis d'un turboréacteur 2 double-flux.

La turbomachine 2 présente un axe de rotation 4 pouvant également former un axe de symétrie. La turbomachine 2 présente une entrée annulaire 6 se divisant en une veine primaire 8 et en une veine secondaire 10 grâce à un bec de séparation 12 de forme circulaire. Ces veines 8 et 10 sont empruntées par, respectivement, un flux primaire 14 et un flux secondaire 16, qui se rejoignent en sortie de la turbomachine. Les flux primaire 14 et secondaire 16 sont des flux annulaires coaxiaux et emmanchés l'un dans l'autre. Ils sont canalisés par les parois internes et externes de la turbomachine 2.

Le flux secondaire 16 est accéléré par une soufflante 18, notamment disposée en entrée 6, si bien qu'une réaction de poussée peut être générée. Celle-ci peut être employée pour le vol d'un aéronef. Des pales de redressement 20 peuvent être disposées dans la veine secondaire 10 et être configurées afin d'augmenter la composante axiale de la vitesse du flux secondaire. La soufflante peut être disposée en amont de la veine primaire 8 et de la veine secondaire 10, notamment à distance axialement de ces veines. Alternativement, la soufflante peut être du type non-carénée, par exemple à double rotor contrarotatifs. Elle peut être placée autour de la veine primaire.

La turbomachine 2 comprend une zone de compression, une chambre de combustion 22 et une zone de détente du flux primaire 14.

La zone de compression est formée par deux compresseurs, un compresseur basse-pression 24 et un compresseur haute-pression 26. Chacun des compresseurs comprend des aubes rotoriques et des aubes statoriques formant un redresseur.

Le compresseur haute-pression 26 peut être placé en entrée de la chambre de combustion 22.

En aval de la chambre de combustion 22, la turbomachine 2 peut présenter une turbine haute-pression 28 couplée à un arbre haute-pression 30, puis une turbine basse-pression 32 couplée à un arbre basse-pression 34. Ce dernier peut être libre en rotation par rapport à l'arbre haute-pression 30. Ces turbines 28, 32 peuvent former la zone de détente du flux primaire 14.

En fonctionnement, la puissance mécanique reçue des turbines 28, 32 est transmise via les arbres 30, 34 et met en mouvement les compresseurs 24, 26. Ces derniers comportent plusieurs rangées d'aubes de rotor associées à des rangées d'aubes de stator. Les aubes de rotor sont solidaires ou cinématiquement entraînées par les arbres 30, 34 autour de l'axe de rotation 4 pour générer un débit d'air et de comprimer progressivement ce dernier jusqu'à l'entrée de la chambre de combustion 22.

La turbomachine peut comprendre des moyens de démultiplication, tel un réducteur 36 qui entraîne la soufflante 18 à une vitesse de rotation plus faible que celle des aubes rotoriques. Ainsi, deux turbines suffisent pour entraîner les compresseurs et la soufflante à trois vitesses de rotation différentes.

Dans cet exemple, le compresseur basse-pression 24 comprend deux rangées d'aubes rotoriques 40, 42 solidaires de l'arbre 34 via un rotor 44.

Le compresseur 24 comprend des aubes statoriques 39, 41 intercalées entre les aubes rotoriques 40, 42.

Selon l'invention, le compresseur 24 comprend dans sa partie aval deux rangées successives d'aubes statoriques 43, 45. Ainsi, au-delà d'un plan P, seules des aubes statoriques sont présentes, alors qu'en amont du plan P, les aubes statoriques et rotoriques sont alternées. L'ensemble des aubes statoriques 39, 41, 43, 45 forme le redresseur 35 du compresseur 24.

Le stator de la turbomachine 2 comprend plusieurs carters support, dont un carter amont 47 et un carter aval 49 disposés de part et d'autre du compresseur 24. Ces carters 47, 49 peuvent comprendre des manches annulaires formant des tronçons de la veine primaire 8. Ils peuvent présenter des bras de support sensiblement radiaux (dits « struts » en anglais) 46, 48 traversant radialement la veine 8. Les manches annulaires peuvent présenter des profils en col de cygne. Elles peuvent marquer des réductions de diamètre de la veine primaire 8, tout comme sa convergence progressive.

Le carter amont 47 et ses bras 46 peuvent supporter le réducteur 36.

En amont des bras 46 peut être prévu une rangée d'aubes statoriques 37 à proximité du bec 12.

En aval des bras 48 figure le compresseur haute-pression 26 muni d'aubes statoriques 50 et rotoriques 52. Ces dernières étant entraînées en rotation au moyen de l'arbre 30.

Si la veine 8 peut être circonscrite entre deux surfaces formées par plusieurs viroles successives, les deux rangées d'aubes statoriques 43, 45 en aval du plan P peuvent être montées sur la même virole externe 54 et/ou interne 56.

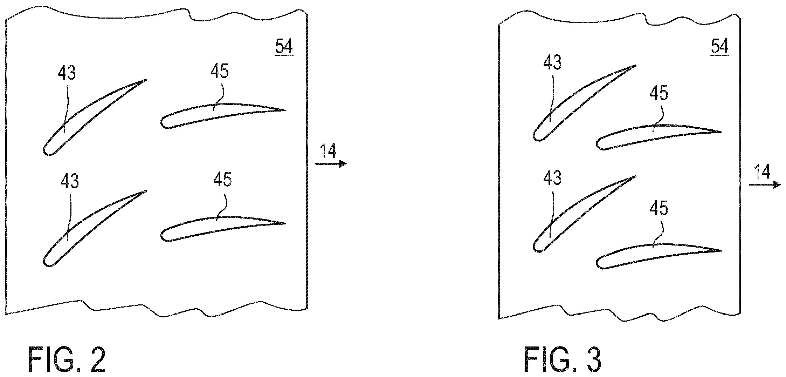

Les figures 2 et 3 montrent deux exemples d'implantation des aubes 43, 45 sur leur virole. Dans cet exemple, une vue radiale des aubes 43, 45 et de la virole externe 54 est représentée. La flèche 14 représente la direction générale du flux qui est sensiblement axiale en sortie du compresseur.

Les rangées d'aubes 43 et 45 n'ont pas la même inclinaison par rapport au flux, afin de redresser chacune progressivement le flux et ainsi minimiser la charge ou la déviation que doit assurer chacune des aubes.

Dans cet exemple, les aubes sont en quinconce.

Si sur la figure 2, les aubes 45 sont axialement à la suite des aubes 43, l'exemple de la figure 3 montre des aubes qui se superposent axialement. Ceci permet une meilleure compacité de la virole pour un même taux de redressement du flux.

Axialement, c'est-à-dire selon l'axe horizontale des figures 2 et 3, les aubes 43, 45 présentent une longueur axiale, qui peut être identique. Alternativement, la longueur des aubes 45, moins inclinées par rapport au flux, peut être la plus grande des deux.

Dans l'exemple de la figure 3, les aubes se chevauchent axialement d'au moins 10% de la longueur axiale des aubes 43 (identique ou plus courtes que les aubes 45). Le chevauchement peut être plus important sans toutefois dépasser 70% de la longueur des aubes 43.

L'arrangement des aubes du compresseur 26 peut être différent de celui illustré en figure 1. Notamment, le compresseur peut comprendre une rangée d'aube rotorique en premier, suivie d'une rangée statorique, puis une autre rangée rotorique et enfin deux ou trois rangées d'aubes statoriques.

## Revendications

1. Turbomachine (2), notamment turboréacteur d'aéronef, comprenant un premier carter (47) définissant une première veine en col de cygne, un second carter (49) définissant une seconde veine en col de cygne, et un compresseur basse-pression (24) positionné directement entre la première et la seconde veine en col de cygne, le compresseur comprenant :
- un rotor (44) muni d'au plus quatre rangées annulaires d'aubes rotoriques (40, 42) et
- un redresseur (35) muni d'au plus six, et préférentiellement d'au plus quatre, rangées annulaires d'aubes statoriques (39, 41, 43, 45) ;
**caractérisée en ce que** dans la turbomachine il peut être défini un plan géométrique (P) en amont duquel les rangées d'aubes rotoriques (40, 42) et statoriques (39, 41) du compresseur (24) sont entrelacées, et en aval duquel au moins deux rangées (43, 45) d'aubes sont prévues, les aubes (43, 45) du compresseur (24) en aval du plan géométrique (P) étant uniquement statoriques, à orientation fixe, et fixées à une virole interne commune (56).

2. Turbomachine selon la revendication 1, **caractérisée en ce que** les au moins deux rangées d'aubes statoriques (43, 45) en aval du plan géométrique (P) sont configurées pour redresser progressivement le flux (14) de gaz de sorte à ce qu'il ne soit sensiblement axial qu'après avoir traversé lesdites au moins deux rangées d'aubes statoriques (43, 45).

3. Turbomachine selon l'une des revendications 1 ou 2, **caractérisée en ce que** les au moins deux rangées d'aubes (43, 45) participent chacune partiellement au redressement du flux (14), la première des au moins deux rangées (43, 45) déviant le flux d'au moins 40% de sa déviation totale subie entre l'amont et l'aval de ces au moins deux rangées d'aubes (43, 45).

4. Turbomachine selon l'une des revendications 1 à 3, **caractérisée en ce que** le compresseur (24) comprend exactement deux rangées d'aubes rotoriques (40, 42).

5. Turbomachine selon l'une des revendications 1 à 4, **caractérisée en ce que** le compresseur (24) comprend exactement quatre rangées d'aubes statoriques (39, 41, 43, 45), dont au moins deux (43, 45) en aval du plan géométrique (P).

6. Turbomachine selon l'une des revendications 1 à 5, **caractérisée en ce que** la première rangée d'aubes à l'amont du compresseur (24) est une rangée d'aubes statoriques (39), préférentiellement à orientation variable.

7. Turbomachine selon l'une des revendications 1 à 6, **caractérisée en ce qu'**à l'exception de la rangée d'aubes statoriques (39) la plus amont, les aubes statoriques (41, 43, 45) sont à orientation fixe.

8. Turbomachine selon l'une des revendications 1 à 7, **caractérisée en ce que** les aubes statoriques (43, 45) des au moins deux rangées sont positionnées en quinconce sur ladite virole (54, 56).

9. Turbomachine selon la revendication 8, **caractérisée en ce que** les aubes ont une longueur axiale et les au moins deux rangées positionnées en quinconce se chevauchent axialement deux à deux, d'au moins 10% de la longueur axiale des aubes d'une des rangées, préférentiellement d'au moins 20% ou 30%.

10. Turbomachine selon l'une des revendications 1 à 9, **caractérisée en ce que** la longueur axiale des aubes (43, 45) en aval du plan géométrique (P) est croissante d'amont en aval.

11. Turbomachine selon l'une des revendications 1 à 10, **caractérisée en ce que** le compresseur (24) est configuré pour permettre une vitesse périphérique des aubes rotoriques (40, 42) supérieure à 300 m/s, préférentiellement supérieure à 340 m/s.

12. Turbomachine selon l'une des revendications 1 à 11, **caractérisée en ce qu'**elle comprend une soufflante (18) reliée au rotor (44) par l'intermédiaire d'un réducteur (36) et **en ce que** les carters (47, 49) comprennent des bras de supports radiaux (46, 48), le flux d'air entrant dans la turbomachine rencontrant, dans cet ordre, la soufflante (18), les bras radiaux (46) du premier carter (47), le compresseur (24), puis les bras radiaux (48) du second carter (49).

13. Turbomachine selon l'une des revendications 1 à 12, **caractérisée en ce que** le premier carter (47) est précédé d'une rangée unique d'aubes statoriques (37).

14. Turbomachine selon la revendication 13, **caractérisée en ce qu'**elle comprend un bec de séparation (12) entre un flux primaire (14) et un flux secondaire (16), ladite rangée unique d'aubes statoriques (37) étant au voisinage dudit bec (12).

15. Turbomachine selon l'une des revendications 1 à 14, **caractérisée en ce qu'**elle comprend un compresseur haute-pression (26) et **en ce que** le second carter (49) relie le compresseur basse-pression (24) au compresseur haute-pression (26).

## Patentansprüche

1. Turbomaschine (2), insbesondere ein Flugzeugturbojet, umfassend ein erstes Gehäuse (47), das eine erste Schwanenhalsader definiert, ein zweites Gehäuse (49), das eine zweite Schwanenhalsader definiert und einen Niederdruckverdichter (24), der unmittelbar zwischen der ersten und der zweiten Schwanenhalsader angeordnet ist, wobei der Verdichter umfasst:
- einen Rotor (44), der mit nicht mehr als vier ringförmigen Reihen von Rotorblättern (40, 42) ausgestattet ist, und
- einen Gleichrichter (35), der mit höchstens sechs und vorzugsweise höchstens vier ringförmigen Reihen von Statorblättern (39, 41, 43, 45) ausgestattet ist **dadurch gekennzeichnet, dass** in der Turbomaschine eine geometrische Ebene (P) definiert werden kann, stromaufwärts deren die Reihen der Rotorblätter (40, 42) und Statorblätter (39, 41) des Verdichters (24) verschachtelt sind und stromabwärts deren mindestens zwei Reihen (43, 45) von Blättern angeordnet sind, wobei die Blätter (43, 45) des Verdichters (24) stromabwärts der geometrischen Ebene (P) nur Statorblätter sind, die eine feste Ausrichtung haben und die an einem gemeinsamen inneren Ring (56) befestigt sind.

2. Turbomaschine nach Anspruch 1, **dadurch gekennzeichnet, dass** die mindestens zwei Reihen Statorblätter (43, 45) stromabwärts der geometrischen Ebene (P) zur schrittweisen Gleichrichtung des Gasstroms (14) konfiguriert sind, so dass dieser erst nach dem Durchqueren der mindestens zwei Reihen Statorblätter (43, 45) im Wesentlichen axial ist.

3. Turbomaschine nach einem der Ansprüche 1 oder 2, **dadurch gekennzeichnet, dass** die mindestens zwei Reihen Blätter (43, 45) jeweils teilweise an der Gleichrichtung der Strömung (14) beteiligt sind, wobei die erste der mindestens zwei Reihen (43, 45) die Strömung um mindestens 40 % ihrer Gesamtablenkung zwischen stromaufwärts und stromabwärts dieser mindestens zwei Reihen Blätter (43, 45) umlenkt.

4. Turbomaschine nach einem der Ansprüche 1 bis 3, **dadurch gekennzeichnet, dass** der Verdichter (24) genau zwei Reihen Rotorblätter (40, 42) umfasst.

5. Turbomaschine nach einem der Ansprüche 1 bis 4, **dadurch gekennzeichnet, dass** der Verdichter (24) genau vier Reihen Statorblätter (39, 41, 43, 45) umfasst, wobei mindestens zwei davon (43, 45) stromabwärts der geometrischen Ebene (P) angeordnet sind.

6. Turbomaschine nach einem der Ansprüche 1 bis 5, **dadurch gekennzeichnet, dass** die erste Reihe der dem Verdichter (24) vorgeschalteten Blätter eine Reihe Statorblätter (39) ist, vorzugsweise mit variabler Ausrichtung.

7. Turbomaschine nach einem der Ansprüche 1 bis 6, **dadurch gekennzeichnet, dass** mit Ausnahme der stromaufwärts gelegenen Reihe Statorblätter (39) die Statorblätter (41, 43, 45) eine feste Ausrichtung haben.

8. Turbomaschine nach einem der Ansprüche 1 bis 7, **dadurch gekennzeichnet, dass** die Statorblätter (43, 45) auf dem Ring (54, 56) versetzt angeordnet sind.

9. Turbomaschine nach Anspruch 8, **dadurch gekennzeichnet, dass** die Blätter eine axiale Länge aufweisen und die mindestens zwei versetzt angeordneten Reihen von mindestens 10 % der axialen Länge der Blätter einer der Reihen, vorzugsweise mindestens 20 % oder 30 % sich axial paarweise überlappen.

10. Turbomaschine nach einem der Ansprüche 1 bis 9, **dadurch gekennzeichnet, dass** die axiale Länge der Blätter (43, 45) stromabwärts der geometrischen Ebene (P) von stromaufwärts nach stromabwärts zunimmt.

11. Turbomaschine nach einem der Ansprüche 1 bis 10, **dadurch gekennzeichnet, dass** der Verdichter (24) konfiguriert ist, eine Umfangsgeschwindigkeit der Rotorblätter (40, 42) von mehr als 300 m/s, vorzugsweise von mehr als 340 m/s zuzulassen.

12. Turbomaschine nach einem der Ansprüche 1 bis 11, **dadurch gekennzeichnet, dass** sie ein Gebläse (18) umfasst, das über ein Untersetzungsgetriebe (36) mit dem Rotor (44) verbunden ist, und dass die Gehäuse (47, 49) radiale Tragarme (46, 48) umfassen, wobei der in die Turbomaschine eintretende Luftstrom in dieser Reihenfolge auf das Gebläse (18), die radialen Arme (46) des ersten Gehäuses (47), den Verdichter (24) und dann auf die radialen Arme (48) des zweiten Gehäuses (49) trifft.

13. Turbomaschine nach einem der Ansprüche 1 bis 12, **dadurch gekennzeichnet, dass** dem ersten Gehäuse (47) eine einzelne Reihe von Statorblättern (37) vorausgeht.

14. Turbomaschine nach Anspruch 13, **dadurch gekennzeichnet, dass** sie eine Nase (12) zur Trennung zwischen einer Primärströmung (14) und einer Sekundärströmung (16) umfasst, wobei sich die einzelne Reihe von Statorblättern (37) in der Nähe der Nase (12) befinden.

15. Turbomaschine nach einem der Ansprüche 1 bis 14, **dadurch gekennzeichnet, dass** sie einen Hochdruckverdichter (26) umfasst und dass das zweite Gehäuse (49) den Niederdruckverdichter (24) mit dem Hochdruckverdichter (26) verbindet.

## Claims

1. Turbomachine (2), preferably an aircraft turbine engine, comprising a first casing (47) defining a first gooseneck duct, a second casing (49) defining a second gooseneck duct, and a low-pressure compressor (24) positioned directly between the first and the second gooseneck duct, the compressor comprising:
- a rotor (44) provided with at most four annular rows of rotor blades (40, 42); and
- a rectifier (35) provided with at most six, and preferably at most four, annular rows of stator vanes (39, 41, 43, 45);
**characterized in that** in the turbomachine can be defined a geometrical plane (P), upstream of which the rows of rotor blades (40, 42) and stator vanes (39, 41) are intertwined, and downstream of which at least two rows (43, 45) of vanes are provided, the vanes (43, 45) of the compressor (24) downstream of the geometric plane (P) being only stator vanes with have a fixed orientation and are fixed to a common ferrule (56).

2. Turbomachine (2) according to claim 1, **characterized in that** the at least two rows of stator vanes (43, 45) downstream of the geometric plane (P) are configured to gradually straighten the flow (14) of gas so that the flow of gas is substantially aligned with the axis of the turbomachine only after having passed through said at least two rows of stator vanes (43, 45).

3. Turbomachine (2) according to claim 1 or 2, **characterized in that** the at least two rows of vanes (43, 45) each partially participate in the straightening of the flow (14), the first of the at least two rows (43, 45) deviating the flow by at least 40% of its total deviation between the upstream and downstream of these at least two rows of vanes (43, 45).

4. Turbomachine (2) according to any of claims 1 to 3, **characterized in that** the compressor (24) comprises exactly two rows of rotor blades (40, 42).

5. Turbomachine (2) according to any of claims 1 to 4, **characterized in that** the compressor (24) comprises exactly four rows of stator vanes (39, 41, 43, 45), of which at least two rows (43, 45) are downstream of the geometric plane (P).

6. Turbomachine (2) according to any of claims 1 to 5, **characterized in that** the most upstream row of blades of the compressor (24) is a row of stator vanes (39), preferably with variable orientation.

7. Turbomachine (2) according to any of claims 1 to 6, **characterized in that** with the exception of the most upstream row of stator vanes (39), the stator vanes (41, 43, 45) are of fixed orientation.

8. Turbomachine (2) according to any of claims 1 to 7, **characterized in that** the stator vanes (43, 45) of the at least two rows downstream of the geometric plane (P) are staggered on said ferrule (54, 56).

9. Turbomachine (2) according to claim 8, **characterized in that** the blades have an axial length and the at least two staggered rows overlap axially in pairs, by at least 10% of the axial length of the blades of one of the rows, preferably by at least 20% or 30%.

10. Turbomachine (2) according to any of claims 1 to 9, **characterized in that** the axial length of the blades (43, 45) downstream of the geometric plane (P) is increasing from upstream to downstream.

11. Turbomachine (2) according to any of claims 1 to 10, **characterized in that** the compressor (24) is configured to allow a peripheral speed of the rotor blades (40, 42) greater than 300 m/s, preferably greater than 340 m/s.

12. Turbomachine (2) according to any of claims 1 to 11, **characterized in that** it comprises a fan (18) connected to the rotor (44) through a reduction gear (36) and **in that** the casings (47, 49) comprise radial supporting struts (46, 48), the air flow entering the turbomachine seeing **in that** order, the fan (18), the radial supporting struts (46) of the first casing (47), the compressor (24), and then the struts (48) of the second casing (49).

13. Turbomachine (2) according to any of claims 1 to 12, **characterized in that** the first casing (47) is preceded by a single row of stator vanes (37).

14. Turbomachine (2) according to claim 13, **characterized in that** it comprises a lip (12) separating the airflow into a primary airflow (14) and a secondary airflow (16), said single row of stator vanes (37) being arranged in the vicinity of said lip (12).

15. Turbomachine (2) according to any of claims 1 to 14, **characterized in that** it comprises a high-pressure compressor (26) and **in that** the second casing (49) connects the low-pressure compressor (24) to the high-pressure compressor (26).
